# EUROPEAN PATENT SPECIFICATION

(11) **EP 3 690 337 B1**
(45) Date of publication and mention of the grant of the patent: **02.07.2025**
(21) Application number: 17934058.3
(22) Date of filing: 21.12.2017
(51) Int. Cl.: F24F 11/00, F25B 49/02, F24F 11/30

(54) **AIR CONDITIONER AND CONTROL METHOD THEREOF, AND COMPUTER READABLE STORAGE MEDIUM**
KLIMAANLAGE UND STEUERUNGSVERFAHREN DAFÜR UND COMPUTERLESBARES SPEICHERMEDIUM
CLIMATISEUR ET SON PROCÉDÉ DE COMMANDE, ET SUPPORT DE STOCKAGE LISIBLE PAR ORDINATEUR

(30) Priority: 08.12.2017 CN 201711317779; 08.12.2017 CN 201721722219 U
(43) Date of publication of application: 05.08.2020
(73) Proprietor: GD Midea Air-Conditioning Equipment Co., Ltd., Foshan, Guangdong 528311 (CN); Midea Group Co., Ltd., Foshan, Guangdong 528311 (CN)
(72) Inventor: LI, Tingxun, Foshan Guangdong 528311 (CN); LIU, Guoqiu, Foshan Guangdong 528311 (CN)
(74) Representative: RGTH
(86) International application number: PCT/CN2017/117754
(87) International publication number: WO 2019/109399

(56) References cited:
- CN-A- 104 833 053
- CN-A- 104 833 053
- CN-A- 105 805 845
- CN-A- 107 328 022
- CN-U- 206 291 417
- JP-A- 2016 035 355
- JP-A- H08 327 195

## Description

### TECHNICAL FIELD

The present invention relates to the technical field of home appliances, and in particular, to an air conditioner, a method for controlling the air conditioner, and a computer readable storage medium.

### BACKGROUND

With the development of technology, air conditioners have become a necessity of people's daily life and provide users with a comfortable environment. During the operation of the air conditioner, the refrigerant is normally circulated in a refrigerant circulation circuit composed of a compressor, a four-way valve, an indoor heat exchanger, and an outdoor heat exchanger. Once the refrigerant leaks, it will bring safety risks. However, nowadays, the air conditioner generally does not have a function of detecting the refrigerant leak. When the refrigerant leaks, the air conditioner cannot effectively process in time, so the air conditioner is not safe enough to operate.

CN 104 833 053 A discloses an air conditioner according to the preamble of claim 1; and a method for operating said air conditioner. A refrigerant concentration sensor is disposed in the indoor unit and/or the outdoor unit of the air conditioner and is configured to detect a concentration of a flammable refrigerant that is leaked into the indoor unit and/or leaked into the outdoor unit. When it is determined that the concentration of the refrigerant leaking into the indoor unit and/or leaking into the outdoor unit exceeds the first predetermined concentration value, an inert gas is released to the indoor unit and/or the outdoor unit, and the gas line and the liquid line between the indoor unit and the outdoor unit are closed.

### SUMMARY

The main objective of the present invention is to provide an air conditioner, a method for controlling the air conditioner, and a computer-readable storage medium, aiming at solving the technical problem that the existing air conditioner is not safe enough to operate.

In order to achieve the above objective, the present invention provides an air conditioner according to independent claim 1.

In some embodiments, the air conditioner further includes an inert gas storage container connected to the controller; and the controller is further configured to control the inert gas storage container to release an inert gas.

In some embodiments, the air conditioner further includes a fire extinguishing agent storage container connected to the controller; and the controller is further configured to control the fire extinguishing agent storage container to spray a fire extinguishing agent after igniting a refrigerant.

In some embodiments, the fire extinguishing agent storage container is a dry powder storage container.

In some embodiments, the air conditioner further includes a smoke and fire detection device connected to the controller for detecting whether the refrigerant is ignited.

In some embodiments, the smoke and fire detection device is a smoke detector.

In some embodiments, the smoke and fire detection device includes a first smoke and fire detection device located inside of the air conditioner, and configured to detect whether an indoor refrigerant is ignited; and a second smoke and fire detection device located outside of the air conditioner, and configured to detect whether an outdoor refrigerant is ignited; and the controller is configured to control the fire extinguishing agent storage container to spray the fire extinguishing agent after the indoor refrigerant is ignited or the outdoor refrigerant is ignited.

In order to achieve the above objective, the present invention further provides a method according to independent claim 8.

In some embodiments, the method further includes:
detecting whether the refrigerant is ignited; and
controlling the fire extinguishing agent storage container to spray the fire extinguishing agent, after the refrigerant is ignited.

Besides, in order to achieve the above objective, the present invention further provides a computer readable storage medium according to claim 11. J

### BRIEF DESCRIPTION OF THE DRAWINGS

FIG. 1 is a schematic structural diagram of an air conditioner according to a first embodiment not according to the present invention;
FIG. 2 is a schematic structural diagram of the air conditioner according to a second embodiment according to the invention; and
FIG. 3 is a schematic flowchart of a method for controlling the air conditioner not according to the present invention.

The realization of the objective, functional characteristics, advantages of the present disclosure are further described with reference to the accompanying drawings.

### DETAILED DESCRIPTION OF THE EMBODIMENTS

It should be understood that the specific embodiments described herein are only used to explain the present disclosure and are not intended to limit the present disclosure.

The present disclosure provides an air conditioner.

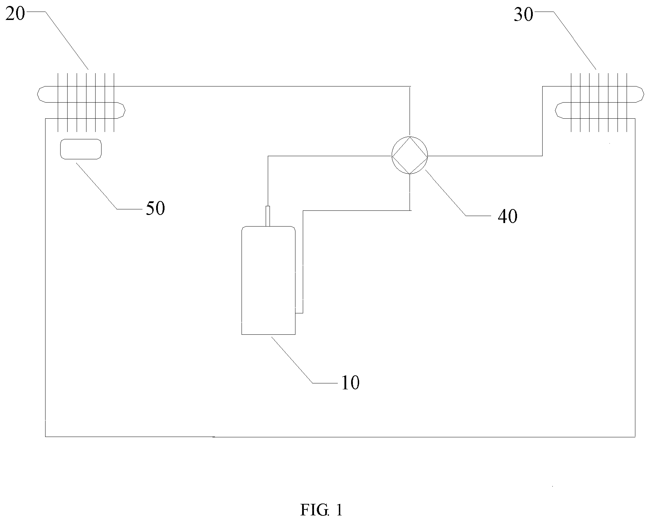

Referring to FIG. 1, FIG. 1 is a schematic structural diagram of an air conditioner according to a first embodiment not according to the present invention.

In the present embodiment, the air conditioner includes a compressor 10, an indoor heat exchanger 20, an outdoor heat exchanger 30, a four-way valve 40, a refrigerant concentration sensor 50 and a controller (not shown). The controller is connected to the compressor 10 and the refrigerant concentration sensor 50. A refrigerant circulation circuit is composed of the compressor 10, the indoor heat exchanger 20, the outdoor heat exchanger 30, and the four-way valve 40.

The refrigerant concentration sensor 50 may be configured to detect the refrigerant concentration in the air conditioner and transmit the detected refrigerant concentration to the controller. The controller is configured to control an operation of the compressor 10 according to the refrigerant concentration transmitted by the refrigerant concentration sensor 50.

In some embodiments, the refrigerant concentration sensor 50 is provided in the air conditioner duct.

In the present embodiment, when the air conditioner is cooling/heating, the controller is configured to start refrigerant concentration detection, control the refrigerant concentration sensor 50 to be powered on, and detect the refrigerant concentration in the air conditioner through the refrigerant concentration sensor 50 in real time or at regular intervals. When the refrigerant concentration sensor 50 detects the refrigerant concentration, it transmits the detected refrigerant concentration to the controller. When the controller receives the refrigerant concentration transmitted by the refrigerant concentration sensor 50, it controls the operation of the compressor 10 according to the refrigerant concentration. For example, when the detected refrigerant concentration is low, e.g., the refrigerant concentration is lower than a certain concentration value, it means that the refrigerant has not leaked, and at this time, the controller is configured to control the compressor 10 to continue to maintain the current operating state. When the detected refrigerant concentration is high, e.g., the refrigerant concentration is higher than a certain concentration value, the refrigerant may leak, and at this time, the controller is configured to control the compressor 10 to stop, that is, the controller is configured to control the air conditioner to stop the cooling/heating operation.

In some embodiments, the refrigerant concentration sensor 50 includes: a first refrigerant concentration sensor located inside of the air conditioner, and configured to detect an indoor refrigerant concentration, and a second refrigerant concentration sensor located outside of the air conditioner, and configured to detect an outdoor refrigerant concentration. Both the first refrigerant concentration sensor and the second refrigerant concentration sensor are connected to the controller.

When the air conditioner is cooling/heating, the controller is configured to start refrigerant concentration detection, control the first refrigerant concentration sensor and the second refrigerant concentration sensor to be powered on, detect the indoor refrigerant concentration through the first refrigerant concentration sensor, and detect the outdoor refrigerant concentration through the second refrigerant concentration sensor.

After the first refrigerant concentration sensor detects the indoor refrigerant concentration, the indoor refrigerant concentration is transmitted to the controller. When the controller receives the indoor refrigerant concentration transmitted by the first refrigerant concentration sensor, the controller compares the indoor refrigerant concentration with the first concentration threshold. Optionally, the value range of the first concentration threshold is preset to be [5%, 25%].

If the indoor refrigerant concentration is less than or equal to the first concentration threshold, it means that the indoor refrigerant concentration is not high. At this time, the air conditioner is controlled to continue to operate normally. Optionally, when the indoor refrigerant concentration is less than or equal to the first concentration threshold, the first refrigerant concentration sensor is controlled to continue to detect the indoor refrigerant concentration again. For example, a corresponding detection period is set in advance, and the first refrigerant concentration sensor is controlled to periodically detect the indoor refrigerant concentration according to the detection period.

If the indoor refrigerant concentration is greater than the first concentration threshold, it means that the indoor refrigerant concentration is high. At this time, the controller is configured to control the compressor 10 to stop.

Similarly, after the second refrigerant concentration sensor detects the outdoor refrigerant concentration, the outdoor refrigerant concentration is transmitted to the controller. When the controller receives the outdoor refrigerant concentration transmitted by the second refrigerant concentration sensor, the controller compares the outdoor refrigerant concentration with the first concentration threshold.

If the outdoor refrigerant concentration is less than or equal to the first concentration threshold, it means that the outdoor refrigerant concentration is not high. At this time, the air conditioner is controlled to continue to operate normally. Optionally, when the outdoor refrigerant concentration is less than or equal to the first concentration threshold, the second refrigerant concentration sensor is controlled to continue to detect the outdoor refrigerant concentration again. For example, the second refrigerant concentration sensor is controlled to periodically detect the outdoor refrigerant concentration according to the detection period.

If the outdoor refrigerant concentration is greater than the first concentration threshold, it means that the outdoor refrigerant concentration is high. At this time, the controller is configured to control the compressor 10 to stop.

In the technical solutions of the present disclosure, the air conditioner includes a refrigerant circulation circuit including a compressor 10, an indoor heat exchanger 20, an outdoor heat exchanger 30, and a four-way valve 40; a refrigerant concentration sensor 50 being configured to detect a refrigerant concentration; and a controller connected to the compressor 10 and the refrigerant concentration sensor 50, and the controller being configured to control an operation of the compressor 10 according to the detected refrigerant concentration. When the refrigerant concentration is high, the controller is configured to control the compressor 10 to stop, that is, control the air conditioner to stop the cooling/heating operation, thereby improving the safety of the air conditioner operation.

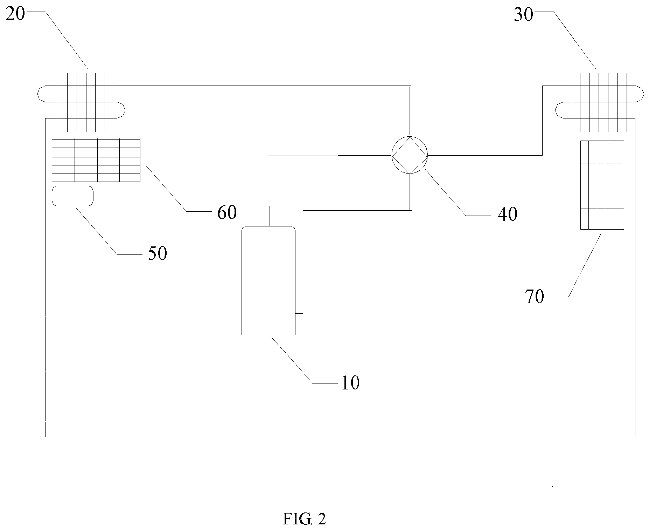

Further, as shown in FIG. 2, based on the first embodiment, a second embodiment of the air conditioner according to the invention is proposed. According to the invention, the air conditioner further includes an indoor fan 60 and an outdoor fan 70, and both the indoor fan 60 and the outdoor fan 70 are connected to the controller.

Besides, in the present embodiment, a second concentration threshold is also set in advance, and the second concentration threshold corresponds to the lower limit value of the flammable concentration of the refrigerant, and the second concentration threshold is greater than the first concentration threshold. Optionally, a preset value range of the second concentration threshold is [15%, 65%].

If the indoor refrigerant concentration is greater than the first concentration threshold and the outdoor refrigerant concentration is less than or equal to the first concentration threshold, the indoor refrigerant concentration is further compared with the second concentration threshold. If the indoor refrigerant concentration is less than or equal to the second concentration threshold, it means that the indoor refrigerant concentration is high, but the lower limit value of the flammable concentration of the refrigerant has not been reached. At this time, the controller is configured to control the indoor fan 60 to start. That is, when the indoor refrigerant concentration is greater than the first concentration threshold and less than or equal to the second concentration threshold, and the outdoor refrigerant concentration is less than or equal to the first concentration threshold, the controller is configured to control the indoor fan 60 to start. The indoor refrigerant concentration is reduced through operating the indoor fan 60, thereby preventing the refrigerant from being ignited and improving safety.

Similarly, if the outdoor refrigerant concentration is greater than the first concentration threshold and the indoor refrigerant concentration is less than or equal to the first concentration threshold, the outdoor refrigerant concentration is further compared with the second concentration threshold. If the outdoor refrigerant concentration is less than or equal to the second concentration threshold, it means that the outdoor refrigerant concentration is high, but the lower limit value of the flammable concentration of the refrigerant has not been reached. At this time, the controller is configured to control the outdoor fan 70 to start. That is, when the outdoor refrigerant concentration is greater than the first concentration threshold and no greater than the second concentration threshold, and the indoor refrigerant concentration is less than or equal to the first concentration threshold, the controller is configured to control the outdoor fan 70 to start. The outdoor refrigerant concentration is reduced through operating the outdoor fan 70, thereby preventing the refrigerant from being ignited and improving safety.

In the technical solutions of the present embodiment, the air conditioner includes an indoor fan 60 and an outdoor fan 70, and both the indoor fan 60 and the outdoor fan 70 are connected to the controller. The controller is configured to control the indoor fan 60 to start after the indoor refrigerant concentration is greater than the first concentration threshold and no greater than a second concentration threshold, and the outdoor refrigerant concentration is less than or equal to the first concentration threshold. And, the controller is configured to control the outdoor fan 70 to start after the outdoor refrigerant concentration is greater than the first concentration threshold and no greater than the second concentration threshold, and the indoor refrigerant concentration is less than or equal to the first concentration threshold. The indoor fan 60 is operated to reduce the indoor refrigerant concentration, and the outdoor fan 70 is operated to reduce the outdoor refrigerant concentration, thereby preventing the refrigerant from being ignited and improving safety.

Further, based on the first embodiment or the second embodiment, a third embodiment of the air conditioner is proposed. The air conditioner further includes an inert gas storage container connected to the controller, and the controller being further configured to control the inert gas storage container to release an inert gas.

In the present embodiment, if the indoor refrigerant concentration is greater than the first concentration threshold and the outdoor refrigerant concentration is less than or equal to the first concentration threshold, the indoor refrigerant concentration is further compared with the second concentration threshold. If the indoor refrigerant concentration is greater than the second concentration threshold, it means that the indoor refrigerant concentration is very high and has reached the lower limit of the flammable concentration of the refrigerant. At this time, in order to prevent the refrigerant from being ignited, the controller is configured to control to start the inert gas storage container, so that the inert gas storage container releases the inert gas, thereby further preventing the refrigerant from being ignited and improving safety.

Similarly, if the outdoor refrigerant concentration is greater than the first concentration threshold and the indoor refrigerant concentration is less than or equal to the first concentration threshold, the outdoor refrigerant concentration is further compared with the second concentration threshold. If the outdoor refrigerant concentration is greater than the second concentration threshold, it means that the outdoor refrigerant concentration is very high, and the lower limit value of the flammable concentration of the refrigerant is reached. At this time, in order to prevent the refrigerant from being ignited, the controller is configured to control to start the inert gas storage container, so that the inert gas storage container releases the inert gas, thereby further preventing the refrigerant from being ignited and improving safety.

In the technical solutions of the present embodiment, the air conditioner further includes an inert gas storage container connected to the controller. The controller is further configured to control the inert gas storage container to release an inert gas after the indoor refrigerant concentration is greater than the second concentration threshold and the outdoor refrigerant concentration is less than or equal to the first concentration threshold, or after the outdoor refrigerant concentration is greater than the second concentration threshold and the indoor refrigerant concentration is less than or equal to the first concentration threshold, thereby further preventing the refrigerant from being ignited and improving safety.

Further, based on any one of the above embodiments, a fourth embodiment of the air conditioner of the present disclosure is proposed. The air conditioner further includes a fire extinguishing agent storage container connected to the controller.

In some embodiments, the fire extinguishing agent storage container is a dry powder storage container.

When a refrigerant is ignited in the air conditioner, the controller is configured to control to start the fire extinguishing agent storage container, and cause the fire extinguishing agent storage container to spray the fire extinguishing agent, so as to extinguish the refrigerant and improve safety.

In some embodiments, the air conditioner further includes a smoke and fire detection device connected to the controller.

In some embodiments, the smoke and fire detection device is a smoke detector, a flame detector, or the like.

When the air conditioner performs cooling/heating operation, the controller is configured to control to power on the smoke and fire detection device, detect whether the refrigerant is ignited by the smoke and fire detection device, and transmit the detection result to the controller.

If the detection result is that the refrigerant is not ignited, the controller does not perform response processing. In some embodiments, when detecting that the refrigerant is not ignited, the controller is configured to control the first refrigerant concentration sensor to detect the indoor refrigerant concentration again, and the second refrigerant concentration sensor to detect the outdoor refrigerant concentration again. The operations in the foregoing embodiments are executed cyclically, and details are not described herein again.

If the detection result is that the refrigerant is ignited, the controller is configured to control the fire extinguishing agent storage container to start and cause the fire extinguishing agent storage container to spray the fire extinguishing agent.

In some embodiments, the smoke and fire detection device includes: a first smoke and fire detection device located inside of the air conditioner, and configured to detect whether the indoor refrigerant is ignited, a second smoke and fire detection device located outside of the air conditioner, and configured to detect whether the outdoor refrigerant is ignited. Both the first smoke and fire detection device and the second smoke and fire detection device are connected to the controller.

When the air conditioner performs cooling/heating operation, the controller is configured to control to power on the first smoke and fire detection device and the second smoke and fire detection device. The first smoke and fire detection device detects whether the indoor refrigerant is ignited, and the second smoke and fire detection device detects whether the outdoor refrigerant is ignited, and transmits the detection result to the controller.

When it is detected that the indoor refrigerant is ignited or the outdoor refrigerant is ignited, the controller is configured to control the fire extinguishing agent storage container to spray the fire extinguishing agent to extinguish the refrigerant, thereby further improving safety.

In the technical solutions of the present embodiment, the air conditioner further includes the fire extinguishing agent storage container connected to the controller. When the refrigerant is ignited, the controller is configured to control the fire extinguishing agent storage container to spray the fire extinguishing agent to extinguish the refrigerant, thereby further improving safety.

Correspondingly, based on the air conditioner in any one of the above embodiments, the present disclosure further provides a method for controlling the air conditioner.

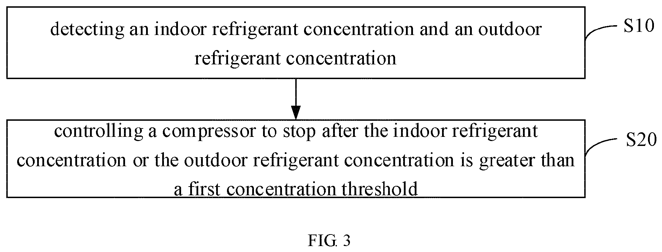

Referring to FIG. 3, FIG. 3 is a schematic flowchart of a method for controlling the air conditioner according to a first embodiment not according to the present invention. In the present embodiment, the method includes the following operations:
Operation S10, detecting an indoor refrigerant concentration and an outdoor refrigerant concentration; and
Operation S20, controlling a compressor to stop after the indoor refrigerant concentration or the outdoor refrigerant concentration is greater than a first concentration threshold.

In the present embodiment, the air conditioner is the air conditioner as described above. When the air conditioner performs cooling/heating operation, the indoor refrigerant concentration and the outdoor refrigerant concentration are detected. Specially, the controller of the air conditioner starts the refrigerant concentration detection, and controls the first refrigerant concentration sensor and the second refrigerant concentration sensor to be powered on. The first refrigerant concentration sensor detects an indoor refrigerant concentration, and the second refrigerant concentration sensor detects an outdoor refrigerant concentration.

After the first refrigerant concentration sensor detects the indoor refrigerant concentration, the indoor refrigerant concentration is transmitted to the controller. When the controller receives the indoor refrigerant concentration transmitted by the first refrigerant concentration sensor, the controller compares the indoor refrigerant concentration with the first concentration threshold. Optionally, the value range of the first concentration threshold is preset to be [5%, 25%].

If the indoor refrigerant concentration is less than or equal to the first concentration threshold, it means that the indoor refrigerant concentration is not high. At this time, the air conditioner is controlled to continue to operate normally. Optionally, when the indoor refrigerant concentration is less than or equal to the first concentration threshold, the first refrigerant concentration sensor is controlled to continue to detect the indoor refrigerant concentration again. For example, a corresponding detection period is set in advance, and the first refrigerant concentration sensor is controlled to periodically detect the indoor refrigerant concentration according to the detection period.

If the indoor refrigerant concentration is greater than the first concentration threshold, it means that the indoor refrigerant concentration is high. At this time, the controller is configured to control the compressor 10 to stop.

Similarly, after the second refrigerant concentration sensor detects the outdoor refrigerant concentration, the outdoor refrigerant concentration is transmitted to the controller. When the controller receives the outdoor refrigerant concentration transmitted by the second refrigerant concentration sensor, the controller compares the outdoor refrigerant concentration with the first concentration threshold.

If the outdoor refrigerant concentration is less than or equal to the first concentration threshold, it means that the outdoor refrigerant concentration is not high. At this time, the air conditioner is controlled to continue to operate normally. Optionally, when the outdoor refrigerant concentration is less than or equal to the first concentration threshold, the second refrigerant concentration sensor is controlled to continue to detect the outdoor refrigerant concentration again. For example, the second refrigerant concentration sensor is controlled to periodically detect the outdoor refrigerant concentration according to the detection period.

If the outdoor refrigerant concentration is greater than the first concentration threshold, it means that the outdoor refrigerant concentration is high. At this time, the controller is configured to control the compressor 10 to stop.

In the technical solutions of the present embodiment, when the air conditioner is running, the indoor refrigerant concentration and the outdoor refrigerant concentration are detected. When the indoor refrigerant concentration or the outdoor refrigerant concentration is greater than the first concentration threshold, the controller is configured to control the compressor 10 to stop, that is, control the air conditioner to stop the cooling/heating operation, thereby improving the safety of the air conditioner operation.

Further, the present invention provides a second embodiment of the method for controlling the air conditioner based on the first embodiment of the method for controlling the air conditioner. According to the invention, the method further comprises:
controlling the indoor fan to start after the indoor refrigerant concentration is greater than the first concentration threshold and no greater than a second concentration threshold, and the outdoor refrigerant concentration is less than or equal to the first concentration threshold;
controlling the outdoor fan to start after the outdoor refrigerant concentration is greater than the first concentration threshold and no greater than the second concentration threshold, and the indoor refrigerant concentration is less than or equal to the first concentration threshold; and
the second concentration threshold being greater than the first concentration threshold.

In the present embodiment, a second concentration threshold is also set in advance, and the second concentration threshold corresponds to the lower limit value of the flammable concentration of the refrigerant, and the second concentration threshold is greater than the first concentration threshold. Optionally, a preset value range of the second concentration threshold is [15%, 65%].

If the indoor refrigerant concentration is greater than the first concentration threshold and the outdoor refrigerant concentration is less than or equal to the first concentration threshold, the indoor refrigerant concentration is further compared with the second concentration threshold. If the indoor refrigerant concentration is less than or equal to the second concentration threshold, it means that the indoor refrigerant concentration is high, but the lower limit value of the flammable concentration of the refrigerant has not been reached. At this time, the controller is configured to control the indoor fan 60 to start. That is, when the indoor refrigerant concentration is greater than the first concentration threshold and less than or equal to the second concentration threshold, and the outdoor refrigerant concentration is less than or equal to the first concentration threshold, the controller is configured to control the indoor fan 60 to start. The indoor refrigerant concentration is reduced through operating the indoor fan 60, thereby preventing the refrigerant from being ignited and improving safety.

Similarly, if the outdoor refrigerant concentration is greater than the first concentration threshold and the indoor refrigerant concentration is less than or equal to the first concentration threshold, the outdoor refrigerant concentration is further compared with the second concentration threshold. If the outdoor refrigerant concentration is less than or equal to the second concentration threshold, it means that the outdoor refrigerant concentration is high, but the lower limit value of the flammable concentration of the refrigerant has not been reached. At this time, the controller is configured to control the outdoor fan 70 to start. That is, when the outdoor refrigerant concentration is greater than the first concentration threshold and no greater than the second concentration threshold, and the indoor refrigerant concentration is less than or equal to the first concentration threshold, the controller is configured to control the outdoor fan 70 to start. The outdoor refrigerant concentration is reduced through operating the outdoor fan 70, thereby preventing the refrigerant from being ignited and improving safety.

In the technical solutions of the present embodiment, the controller is configured to control the indoor fan 60 to start after the indoor refrigerant concentration is greater than the first concentration threshold and no greater than a second concentration threshold, and the outdoor refrigerant concentration is less than or equal to the first concentration threshold. And, the controller is configured to control the outdoor fan 70 to start after the outdoor refrigerant concentration is greater than the first concentration threshold and no greater than the second concentration threshold, and the indoor refrigerant concentration is less than or equal to the first concentration threshold. The indoor fan 60 is operated to reduce the indoor refrigerant concentration, and the outdoor fan 70 is operated to reduce the outdoor refrigerant concentration, thereby preventing the refrigerant from being ignited and improving safety.

Further, the present disclosure provides a third embodiment of the method for controlling the air conditioner based on the first embodiment or the second embodiment of the method for controlling the air conditioner. In the present embodiment, the method further including:
controlling the inert gas storage container to release the inert gas after the indoor refrigerant concentration is greater than the second concentration threshold, and the outdoor refrigerant concentration is less than or equal to the first concentration threshold; or after the outdoor refrigerant concentration is greater than the second concentration threshold, and the indoor refrigerant concentration is less than or equal to the first concentration threshold; and the second concentration threshold being greater than the first concentration threshold.

In the present embodiment, if the indoor refrigerant concentration is greater than the first concentration threshold and the outdoor refrigerant concentration is less than or equal to the first concentration threshold, the indoor refrigerant concentration is further compared with the second concentration threshold. The second concentration threshold is the threshold described in the second embodiment, and optionally, the value range of the second concentration threshold is [15%, 65%]. If the indoor refrigerant concentration is greater than the second concentration threshold, it means that the indoor refrigerant concentration is very high and has reached the lower limit of the flammable concentration of the refrigerant. At this time, in order to prevent the refrigerant from being ignited, the controller is configured to control to start the inert gas storage container, so that the inert gas storage container releases the inert gas, thereby further preventing the refrigerant from being ignited and improving safety.

Similarly, if the outdoor refrigerant concentration is greater than the first concentration threshold and the indoor refrigerant concentration is less than or equal to the first concentration threshold, the outdoor refrigerant concentration is further compared with the second concentration threshold. If the outdoor refrigerant concentration is greater than the second concentration threshold, it means that the outdoor refrigerant concentration is very high, and the lower limit value of the flammable concentration of the refrigerant is reached. At this time, in order to prevent the refrigerant from being ignited, the controller is configured to control to start the inert gas storage container, so that the inert gas storage container releases the inert gas, thereby further preventing the refrigerant from being ignited and improving safety.

In the technical solutions of the present embodiment, the controller is configured to control the inert gas storage container to release an inert gas after the indoor refrigerant concentration is greater than the second concentration threshold and the outdoor refrigerant concentration is less than or equal to the first concentration threshold, or after the outdoor refrigerant concentration is greater than the second concentration threshold and the indoor refrigerant concentration is less than or equal to the first concentration threshold, thereby further preventing the refrigerant from being ignited and improving safety.

Further, the present disclosure provides a fourth embodiment of the method for controlling the air conditioner based on any embodiment of the method for controlling the air conditioner. In the present embodiment, the method further including:
detecting whether the refrigerant is ignited; controlling the fire extinguishing agent storage container to spray the fire extinguishing agent, if the refrigerant is ignited.

In the present embodiment, when the air conditioner performs cooling/heating operation, the controller is configured to control to power on the smoke and fire detection device, detect whether the refrigerant is ignited by the smoke and fire detection device, and transmit the detection result to the controller.

If the detection result is that the refrigerant is not ignited, the controller does not perform response processing. Optionally, when detecting that the refrigerant is not ignited, the controller is configured to control the first refrigerant concentration sensor to detect the indoor refrigerant concentration again, and the second refrigerant concentration sensor to detect the outdoor refrigerant concentration again. The operations in the foregoing embodiments are executed cyclically, and details are not described herein again.

If the detection result is that the refrigerant is ignited, the controller is configured to control the fire extinguishing agent storage container to start and cause the fire extinguishing agent storage container to spray the fire extinguishing agent.

Optionally, the smoke and fire detection device includes a first smoke and fire detection device located inside of the air conditioner, and a second smoke and fire detection device located outside of the air conditioner. When the air conditioner performs cooling/heating operation, the controller is configured to control to power on the first smoke and fire detection device and the second smoke and fire detection device. The first smoke and fire detection device detects whether the indoor refrigerant is ignited, and the second smoke and fire detection device detects whether the outdoor refrigerant is ignited, and transmits the detection result to the controller.

When it is detected that the indoor refrigerant is ignited or the outdoor refrigerant is ignited, the controller is configured to control the fire extinguishing agent storage container to spray the fire extinguishing agent to extinguish the refrigerant, thereby further improving safety.

In the technical solutions of the present embodiment, when the air conditioner performs cooling/heating operation, detecting whether the refrigerant is ignited, and when the refrigerant is ignited, the controller is configured to control the fire extinguishing agent storage container to spray the fire extinguishing agent to extinguish the refrigerant, thereby further improving safety.

In addition, the present invention further provides a computer readable storage medium. According to the invention, the computer readable storage medium stores a program for controlling an air conditioner, the program, when executed by a processor, implements the following operations:
detecting an indoor refrigerant concentration and an outdoor refrigerant concentration; and
controlling a compressor to stop after the indoor refrigerant concentration or the outdoor refrigerant concentration is greater than a first concentration threshold;
controlling the indoor fan to start after the indoor refrigerant concentration is greater than the first concentration threshold and no greater than a second concentration threshold, and the outdoor refrigerant concentration is less than or equal to the first concentration threshold;
controlling the outdoor fan to start after the outdoor refrigerant concentration is greater than the first concentration threshold and no greater than the second concentration threshold, and the indoor refrigerant concentration is less than or equal to the first concentration threshold; and
the second concentration threshold being greater than the first concentration threshold.

Optionally, the program, when executed by the processor, implements the following operations:
controlling the inert gas storage container to release the inert gas after the indoor refrigerant concentration is greater than the second concentration threshold, and the outdoor refrigerant concentration is less than or equal to the first concentration threshold; or after the outdoor refrigerant concentration is greater than the second concentration threshold, and the indoor refrigerant concentration is less than or equal to the first concentration threshold; and the second concentration threshold being greater than the first concentration threshold.

Optionally, the program, when executed by the processor, implements the following operations:
detecting whether the refrigerant is ignited;
controlling the fire extinguishing agent storage container to spray the fire extinguishing agent, if the refrigerant is ignited.

In the technical solutions of the present embodiment, when the air conditioner is running, the indoor refrigerant concentration and the outdoor refrigerant concentration are detected. When the indoor refrigerant concentration or the outdoor refrigerant concentration is greater than the first concentration threshold, the controller is configured to control the compressor to stop, that is, control the air conditioner to stop the cooling/heating operation, thereby improving the safety of the air conditioner operation.

It should be noted that, in the document, the terms "comprising", "including" or any other variants thereof are intended to cover non-exclusive inclusion, such that a process, method, article or device including a series of elements includes not only those elements, but also includes other elements not explicitly listed, or elements inherent to such a process, method, article, or device. Without more restrictions, an element limited by the sentence "including a ..." does not exclude that there are other identical elements in the process, method, article, or device that includes the element.

The serial numbers of the foregoing embodiments of the present disclosure are only for description, and do not represent the superiority or inferiority of the embodiments.

Through the description of the above embodiments, those skilled in the art can clearly understand that the method in the foregoing embodiment can be implemented by means of software plus a necessary universal hardware platform, and of course, also by hardware, but in many cases the former is a better implementation. Based on this understanding, the technical solution of the present disclosure, or the part that contributes to the existing technology, can be embodied in the form of a software product. The computer software product is stored on a storage medium (such as a ROM/RAM, a magnetic disk, and an optical disc) as described above, and includes several instructions for causing a terminal device (such as a mobile phone, a TV, a computer, etc.) to execute the methods of the embodiments of the present disclosure.

## Claims

1. An air conditioner, comprising:
a refrigerant circulation circuit comprising:
a compressor (10),
an indoor heat exchanger (20), and
an outdoor heat exchanger (30);
a refrigerant concentration sensor (50); and
a controller connected to the compressor (10) and the refrigerant concentration sensor (50), and the controller being configured to control an operation of the compressor (10) according to a refrigerant concentration detected by the refrigerant concentration sensor (50),
wherein the refrigerant concentration sensor (50) comprises:
a first refrigerant concentration sensor located inside of the air conditioner, and configured to detect an indoor refrigerant concentration; and
a second refrigerant concentration sensor located outside of the air conditioner, and configured to detect an outdoor refrigerant concentration; and
the controller is configured to control the compressor (10) to stop when the indoor refrigerant concentration is greater than a first concentration threshold or the outdoor refrigerant concentration is greater than the first concentration threshold;
wherein the air conditioner further comprises:
an indoor fan (60) connected to the controller; and
an outdoor fan (70) connected to the controller;
**characterized in that** the air conditioner comprises a four-way valve (40); and **in that** the controller is further configured to:
control the indoor fan (60) to start after the indoor refrigerant concentration is greater than the first concentration threshold and not greater than a second concentration threshold, and the outdoor refrigerant concentration is less than or equal to the first concentration threshold; and
control the outdoor fan (70) to start after the outdoor refrigerant concentration is greater than the first concentration threshold and not greater than the second concentration threshold, and the indoor refrigerant concentration is less than or equal to the first concentration threshold,
wherein the second concentration threshold is greater than the first concentration threshold.

2. The air conditioner of claim 1, wherein:
the air conditioner further comprises: an inert gas storage container connected to the controller; and
the controller is further configured to control the inert gas storage container to release an inert gas.

3. The air conditioner of claim 2, wherein:
the air conditioner further comprises: a fire-extinguishing agent storage container connected to the controller; and
the controller is further configured to control the fire-extinguishing agent storage container to spray a fire extinguishing agent when a refrigerant is ignited.

4. The air conditioner of claim 3, wherein the fire-extinguishing agent storage container is a dry-powder storage container.

5. The air conditioner of claim 4, further comprising:
a smoke and fire detection device connected to the controller for detecting whether the refrigerant is ignited.

6. The air conditioner of claim 5, wherein the smoke and fire detection device is a smoke detector.

7. The air conditioner of any one of claims 5 to 6, wherein:
the smoke and fire detection device comprises:
a first smoke and fire detection device located inside of the air conditioner, and configured to detect whether an indoor refrigerant is ignited; and
a second smoke and fire detection device located outside of the air conditioner, and configured to detect whether an outdoor refrigerant is ignited; and
the controller is configured to control the fire-extinguishing agent storage container to spray the fire extinguishing agent when the indoor refrigerant is ignited or the outdoor refrigerant is ignited.

8. A method for controlling an air conditioner of anyone of the claims 1 to 7, comprising:
detecting an indoor refrigerant concentration and an outdoor refrigerant concentration (S10); and
controlling the compressor (10) to stop when the indoor refrigerant concentration or the outdoor refrigerant concentration is greater than a first concentration threshold (S20) wherein the method further comprises:
controlling the indoor fan to start after the indoor refrigerant concentration is greater than the first concentration threshold and no greater than a second concentration threshold, and the outdoor refrigerant concentration is less than or equal to the first concentration threshold; and
controlling the outdoor fan to start after the outdoor refrigerant concentration is greater than the first concentration threshold and no greater than the second concentration threshold, and the indoor refrigerant concentration is less than or equal to the first concentration threshold, wherein the second concentration threshold is greater than the first concentration threshold.

9. The method of claim 8, further comprising:
controlling the inert gas storage container to release an inert gas after the indoor refrigerant concentration is greater than a second concentration threshold, and the outdoor refrigerant concentration is less than or equal to the first concentration threshold, wherein the second concentration threshold is greater than the first concentration threshold (c); or
controlling the inert gas storage container to release an inert gas after the outdoor refrigerant concentration is greater than the second concentration threshold, and the indoor refrigerant concentration is less than or equal to the first concentration threshold, wherein the second concentration threshold is greater than the first concentration threshold.

10. The method of any one of claims 8 to 9, further comprising:
detecting whether the refrigerant is ignited (d); and
controlling the fire-extinguishing agent storage container to spray the fire extinguishing agent, when the refrigerant is ignited (e).

11. A computer readable storage medium, wherein the computer readable storage medium stores a program for controlling an air conditioner, and the program, when executed by a processor, implements operations of a method for controlling the air conditioner according to any one of claims 8 to 10.

## Patentansprüche

1. Klimaanlage, umfassend
einen Kältemittelkreislauf, umfassend:
einen Kompressor (10),
einen Innenbereich-Wärmetauscher (20), und
einen Außenbereich-Wärmetauscher (30);
einen Kältemittelkonzentrationssensor (50); und
eine Steuerung, die mit dem Kompressor (10) und dem Kältemittelkonzentrationssensor (50) verbunden ist, und wobei die Steuerung so konfiguriert ist, dass sie einen Betrieb des Kompressors (10) gemäß einer durch die Kältemittelkonzentrationssensor (50) erfassten Kältemittelkonzentration steuert, wobei der Kältemittelkonzentrationssensor (50) Folgendes umfasst:
einen ersten Kältemittelkonzentrationssensor, der sich im Inneren der Klimaanlage befindet und so konfiguriert ist, dass er eine Innenbereich-Kältemittelkonzentration erfasst; und
einen zweiten Kältemittelkonzentrationssensor, der sich außerhalb der Klimaanlage befindet und so konfiguriert ist, dass er eine Außenbereich-Kältemittelkonzentration erfasst; und
die Steuerung so konfiguriert ist, dass sie den Kompressor (10) so steuert, dass er stoppt, wenn die Innenbereich-Kältemittelkonzentration größer als ein erster Konzentrationsschwellenwert ist oder die Außenbereich-Kältemittelkonzentration größer als der erste Konzentrationsschwellenwert ist; wobei die Klimaanlage ferner Folgendes umfasst:
ein Innenbereich-Gebläse (60), das mit der Steuerung verbunden ist; und
ein Außenbereich-Gebläse (70), das mit der Steuerung verbunden ist;
**dadurch gekennzeichnet, dass** die Klimaanlage ein Vier-Wege-Ventil (40) umfasst; und dass die Steuerung ferner so konfiguriert ist, dass sie
das Innenbereich-Gebläse (60) so steuert, dass es startet, nachdem die Innenbereich-Kältemittelkonzentration größer als der erste Konzentrationsschwellenwert und nicht größer als ein zweiter Konzentrationsschwellenwert ist, und die Außenbereich-Kältemittelkonzentration kleiner oder gleich dem ersten Konzentrationsschwellenwert ist; und
das Außenbereich-Gebläse (70) so steuert, dass es startet, nachdem die Außenbereich-Kältemittelkonzentration größer als der erste Konzentrationsschwellenwert und nicht größer als der zweite Konzentrationsschwellenwert ist und die Innenbereich-Kältemittelkonzentration kleiner oder gleich dem ersten Konzentrationsschwellenwert ist,
wobei der zweite Konzentrationsschwellenwert größer als der erste Konzentrationsschwellenwert ist.

2. Klimaanlage gemäß Anspruch 1, wobei:
die Klimaanlage ferner einen Inertgas-Speicherbehälter umfasst, der mit der Steuerung verbunden ist; und
die Steuerung ferner so konfiguriert ist, dass sie den Inertgas-Speicherbehälter so steuert, dass er ein Inertgas freisetzt.

3. Klimaanlage gemäß Anspruch 2, wobei:
die Klimaanlage ferner Folgendes umfasst: einen Vorratsbehälter für Feuerlöschmittel, der mit der Steuerung verbunden ist; und
die Steuerung ferner so konfiguriert ist, dass sie den Vorratsbehälter für Feuerlöschmittel so steuert, dass er ein Feuerlöschmittel versprüht, wenn ein Kältemittel entzündet wird.

4. Klimaanlage gemäß Anspruch 3, wobei der Vorratsbehälter für das Feuerlöschmittel ein Vorratsbehälter für Trockenpulver ist.

5. Klimaanlage gemäß Anspruch 4, ferner umfassend:
eine Rauch- und Branderkennungsvorrichtung, die mit der Steuerung verbunden ist, um zu erkennen, ob das Kältemittel entzündet ist.

6. Klimaanlage gemäß Anspruch 5, wobei die Rauch- und Branderkennungsvorrichtung ein Rauchmelder ist.

7. Klimaanlage gemäß einem der Ansprüche 5 bis 6, wobei:
die Rauch- und Branderkennungsvorrichtung Folgendes umfasst:
eine erste Rauch- und Branderkennungsvorrichtung, die sich im Inneren der Klimaanlage befindet und so konfiguriert ist, dass sie erkennt, ob ein Innenbereich-Kältemittel entzündet ist; und
eine zweite Rauch- und Branderkennungsvorrichtung, die sich außerhalb der Klimaanlage befindet und so konfiguriert ist, dass sie erkennt, ob ein Außenbereich-Kältemittel entzündet ist; und
die Steuerung so konfiguriert ist, dass sie den Vorratsbehälter für das Feuerlöschmittel so steuert, dass er das Feuerlöschmittel versprüht, wenn das Innenbereich-Kältemittel entzündet wird oder das Außenbereich-Kältemittel entzündet wird.

8. Verfahren zum Steuern einer Klimaanlage gemäß einem der Ansprüche 1 bis 7, umfassend:
Erfassen einer Innenbereich-Kältemittelkonzentration und einer Außenbereich-Kältemittelkonzentration (S10); und
Steuern des Kompressors (10), so dass er stoppt, wenn die Innenbereich-Kältemittelkonzentration oder die Außenbereich-Kältemittelkonzentration größer ist als ein erster Konzentrationsschwellenwert (S20)
wobei das Verfahren ferner Folgendes umfasst:
Steuern des Innenbereich-Gebläses, so dass es startet, nachdem die Innenbereich-Kältemittelkonzentration größer als der erste Konzentrationsschwellenwert und nicht größer als ein zweiter Konzentrationsschwellenwert ist und die Außenbereich-Kältemittelkonzentration kleiner als oder gleich dem ersten Konzentrationsschwellenwert ist; und Steuern des Außenbereich-Gebläses, so dass es startet, nachdem die Außenbereich-Kältemittelkonzentration größer als der erste Konzentrationsschwellenwert und nicht größer als der zweite Konzentrationsschwellenwert ist, und die Innenbereich-Kältemittelkonzentration kleiner oder gleich dem ersten Konzentrationsschwellenwert ist, wobei der zweite Konzentrationsschwellenwert größer als der erste Konzentrationsschwellenwert ist.

9. Verfahren gemäß Anspruch 8, ferner umfassend:
Steuern des Inertgas-Speicherbehälters, um ein Inertgas freizugeben, nachdem die Innenbereich-Kältemittelkonzentration größer als ein zweiter Konzentrationsschwellenwert ist und die Außenbereich-Kältemittelkonzentration kleiner als oder gleich dem ersten Konzentrationsschwellenwert ist, wobei der zweite Konzentrationsschwellenwert größer als der erste Konzentrationsschwellenwert ist (c); oder Steuern des Inertgasspeichers, so dass er ein Inertgas freigibt, nachdem die Außenbereich-Kältemittelkonzentration größer als der zweite Konzentrationsschwellenwert ist und die Innenbereich-Kältemittelkonzentration kleiner oder gleich dem ersten Konzentrationsschwellenwert ist, wobei der zweite Konzentrationsschwellenwert größer als der erste Konzentrations-schwellenwert ist.

10. Verfahren gemäß einem der Ansprüche 8 bis 9, ferner umfassend:
Feststellen, ob das Kältemittel entzündet wird (d); und
Steuern des Vorratsbehälters für das Feuerlöschmittel, so dass er das Feuerlöschmittel versprüht, wenn das Kältemittel entzündet wird (e).

11. Computerlesbares Speichermedium, wobei das computerlesbare Speichermedium ein Programm zum Steuern einer Klimaanlage speichert, und das Programm, wenn es von einem Prozessor ausgeführt wird, Operationen eines Verfahrens zum Steuern der Klimaanlage gemäß einem der Ansprüche 8 bis 10 implementiert.

## Revendications

1. Climatiseur comprenant :
un circuit de circulation du réfrigérant comprenant :
un compresseur (10),
un échangeur de chaleur intérieur (20), et
un échangeur de chaleur extérieur (30) ;
un capteur de concentration de réfrigérant (50) ; et
un contrôleur connecté au compresseur (10) et au capteur de concentration de réfrigérant (50), et le contrôleur étant configuré pour commander le fonctionnement du compresseur (10) en fonction d'une concentration de réfrigérant détectée par le capteur de concentration de réfrigérant (50), le capteur de concentration de réfrigérant (50) comprenant :
un premier capteur de concentration de réfrigérant situé à l'intérieur du climatiseur et configuré pour détecter une concentration de réfrigérant à l'intérieur ; et
un second capteur de concentration de réfrigérant situé à l'extérieur du climatiseur et configuré pour détecter une concentration de réfrigérant à l'extérieur ; et
le contrôleur est configuré pour commander l'arrêt du compresseur (10) lorsque la concentration de réfrigérant intérieur est supérieure à un premier seuil de concentration ou lorsque la concentration de réfrigérant extérieur est supérieure au premier seuil de concentration ;
dans lequel le climatiseur comprend en outre :
un ventilateur intérieur (60) connecté au contrôleur ; et
un ventilateur extérieur (70) connecté au contrôleur ;
**caractérisé par le fait que** le climatiseur comprend une vanne à quatre voies (40) ; et **par le fait que** le contrôleur est en outre configuré pour :
commander le ventilateur intérieur (60) pour qu'il démarre lorsque la concentration de réfrigérant intérieur est supérieure au premier seuil de concentration et inférieure à un deuxième seuil de concentration, et que la concentration de réfrigérant extérieur est inférieure ou égale au premier seuil de concentration ; et
commander le ventilateur extérieur (70) pour qu'il démarre lorsque la concentration de réfrigérant extérieur est supérieure au premier seuil de concentration et inférieure au deuxième seuil de concentration , et que la concentration de réfrigérant intérieur est inférieure ou égale au premier seuil de concentration,
dans lequel le deuxième seuil de concentration est supérieur au premier seuil de concentration.

2. Le climatiseur de la revendication 1, dans lequel :
le climatiseur comprend en outre : un réservoir de stockage de gaz inerte relié au contrôleur ; et
le contrôleur est en outre configuré pour commander le conteneur de stockage de gaz inerte afin de libérer un gaz inerte.

3. Le climatiseur de la revendication 2, dans lequel :
le climatiseur comprend en outre : un réservoir de stockage d'agent extincteur relié au contrôleur ; et
le contrôleur est en outre configuré pour commander le conteneur de stockage de l'agent extincteur afin de pulvériser un agent extincteur lorsqu'un réfrigérant est enflammé.

4. Le climatiseur de la revendication 3, dans lequel le conteneur de stockage de l'agent extincteur est un conteneur de stockage de poudre sèche.

5. Le climatiseur de la revendication 4, comprenant en outre :
un dispositif de détection de fumée et d'incendie connecté au contrôleur pour détecter si le réfrigérant est enflammé.

6. Le climatiseur de la revendication 5, dans lequel le dispositif de détection de fumée et d'incendie est un détecteur de fumée.

7. Le climatiseur de l'une des revendications 5 à 6, dans lequel :
le dispositif de détection de fumée et d'incendie comprend :
un premier dispositif de détection de fumée et d'incendie situé à l'intérieur du climatiseur et configuré pour détecter si un réfrigérant intérieur est enflammé ; et
un second dispositif de détection de fumée et d'incendie situé à l'extérieur du climatiseur et configuré pour détecter si un réfrigérant extérieur est enflammé ; et
le contrôleur est configuré pour commander le conteneur de stockage de l'agent extincteur afin de pulvériser l'agent extincteur lorsque le réfrigérant intérieur est enflammé ou que le réfrigérant extérieur est enflammé.

8. Méthode de commande d'un climatiseur selon l'une des revendications 1 à 7, comprenant :
détection d'une concentration intérieure de réfrigérant et d'une concentration extérieure de réfrigérant (S10) ; et
commander l'arrêt du compresseur (10) lorsque la concentration de réfrigérant intérieur ou la concentration de réfrigérant extérieur est supérieure à un premier seuil de concentration (S20) dans laquelle la méthode comprend en outre :
commander le démarrage du ventilateur intérieur lorsque la concentration de réfrigérant intérieur est supérieure au premier seuil de concentration et ne dépasse pas un deuxième seuil de concentration, et que la concentration de réfrigérant extérieur est inférieure ou égale au premier seuil de concentration ; et
commander le démarrage du ventilateur extérieur lorsque la concentration de réfrigérant extérieur est supérieure au premier seuil de concentration et inférieure au deuxième seuil de concentration, et que la concentration de réfrigérant intérieur est inférieure ou égale au premier seuil de concentration, le deuxième seuil de concentration étant supérieur au premier seuil de concentration.

9. La méthode de la revendication 8, comprenant en outre :
commander le conteneur de stockage de gaz inerte pour libérer un gaz inerte après que la concentration de réfrigérant intérieur est supérieure à un deuxième seuil de concentration, et que la concentration de réfrigérant extérieur est inférieure ou égale au premier seuil de concentration, le deuxième seuil de concentration étant supérieur au premier seuil de concentration (c) ; ou
commander le conteneur de stockage de gaz inerte pour libérer un gaz inerte après que la concentration de réfrigérant extérieur est supérieure au deuxième seuil de concentration et que la concentration de réfrigérant intérieur est inférieure ou égale au premier seuil de concentration, le deuxième seuil de concentration étant supérieur au premier seuil de concentration.

10. La méthode de l'une des revendications 8 à 9, comprenant en outre :
détecter si le réfrigérant est enflammé (d) ; et
commander le conteneur de stockage de l'agent extincteur pour pulvériser l'agent extincteur lorsque le réfrigérant est enflammé (e).

11. Support de stockage lisible par ordinateur, dans lequel le support de stockage lisible par ordinateur stocke un programme de commande d'un climatiseur, et le programme, lorsqu'il est exécuté par un processeur, met en œuvre les opérations d'une méthode de commande du climatiseur selon l'une des revendications 8 à 10.
